# EUROPEAN PATENT APPLICATION

(11) **EP 2 390 786 A1**
(43) Date of publication of application: **30.11.2011**
(21) Application number: 09838808.5
(22) Date of filing: 26.01.2009
(51) Int. Cl.: G06F 9/445

(54) **INFORMATION PROCESSOR PROVIDED WITH CONFIGURATION CHANGE FUNCTION, SYSTEM CONFIGURATION CHANGE METHOD, AND SYSTEM CONFIGURATION CHANGE PROGRAM**

(71) Applicant: Fujitsu Limited, Kawasaki-shi, Kanagawa 211-8588 (JP)
(72) Inventor: YAMAGUCHI, Hirobumi, Kawasaki-shi Kanagawa 211-8588 (JP)
(74) Representative: Holz, Ulrike
(86) International application number: PCT/JP2009/051194
(87) International publication number: WO 2010/084617

(57) **Abstract**

An information processing device includes a processing unit and a first storage device, wherein the first storage device includes device change information including difference information relative to first system configuration information defining a configuration of a device connected to the information processing device on each system configuration capable of being taken by the information processing device, and a first computer program causing the processing unit to function as: a device configuration information detecting unit detecting device configuration information that is device information after the device connected to the information processing device is changed; and a device configuration changing unit changing the first system configuration information into second system configuration information based on the device configuration information detected by the device configuration information detecting unit and the device change information.

## Description

### TECHNICAL FIELD

The present invention relates to an information processing device having a configuration changing function, a system configuration changing method, and a system configuration changing computer program.

### BACKGROUND ART

Conventionally, information processing devices include a function to change system configuration information stored in the devices themselves so that the OS can recognize the system configuration being changed when the system configuration is changed due to addition of a device or the like. As information processing devices of this type, for example, information processing devices are known in which when a device is added, the OS changes, as the system configuration information, the name space defined in an Advanced Configuration and Power Interface (ACPI) table in the ACPI specification.

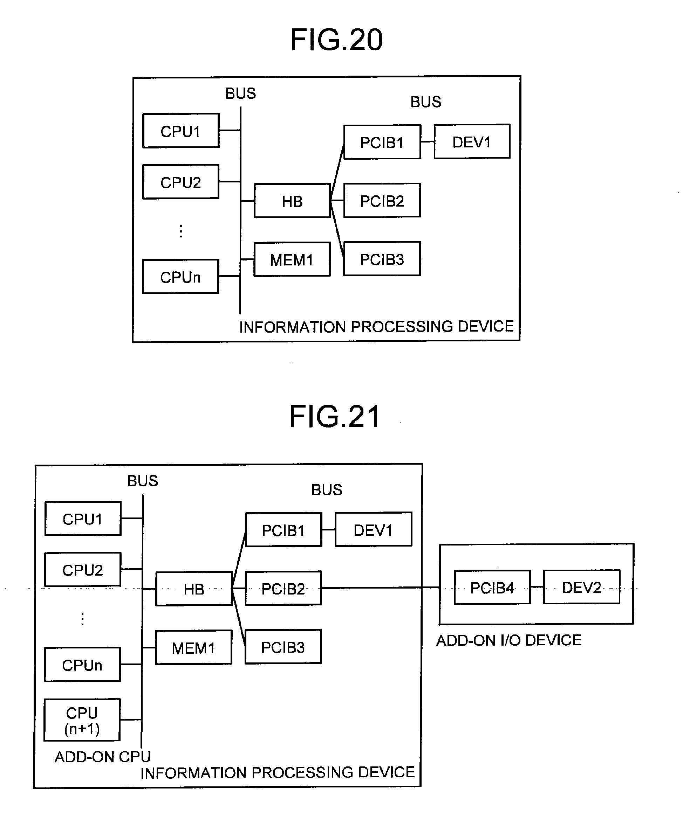

Described below is a function of the OS in the conventional information processing devices to recognize the name space defined in the ACPI table in the ACPI specification as the system configuration information when the system configuration is changed due to addition of a device. The ACPI specification is an industry standard specification regarding system configurations and power control in information processing devices, the detailed information is disclosed in http://www.acpi.info/, and thus the description is omitted. Described below is a case where a central processing unit (CPU) (n+1) and an input/output (I/O) device that are illustrated in FIG. 21 are added to an information processing device including n pieces of CPUs (CPU1 to CPUn), a memory (MEM1), and other devices (HB, PCIB1 to PCIB3, and DEV1) as illustrated in FIG. 20.

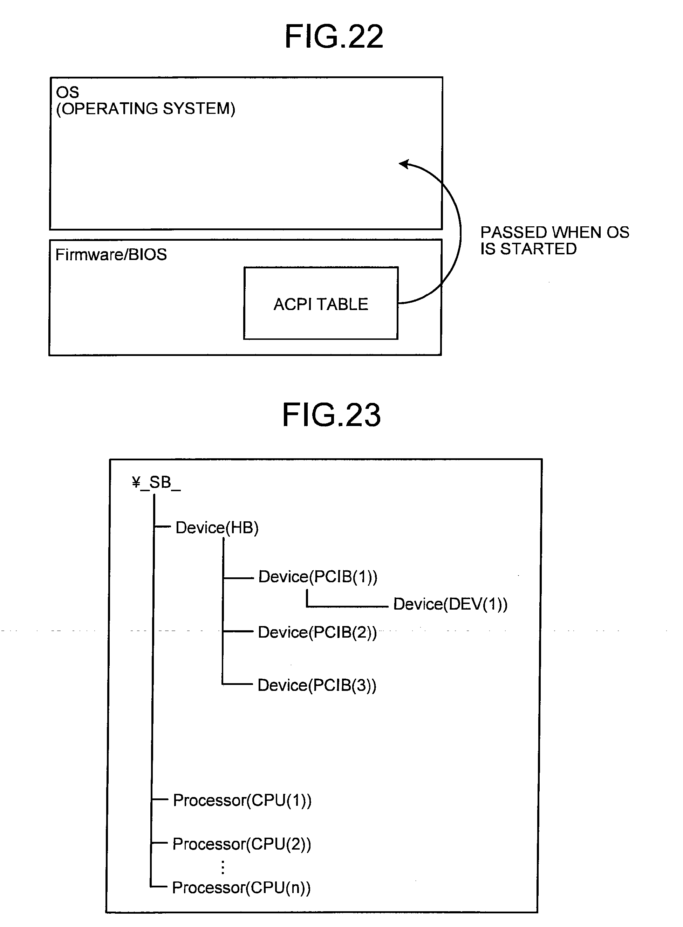

As illustrated in FIG. 22, an ACPI table in the ACPI specification is a table to be created in the memory by firmware such as a basic input output system (BIOS) to be passed to the OS. The OS initializes the system of or controls the power of the information processing device according to information listed in the ACPI table.

The ACPI table in the ACPI specification includes Differentiated System Description Table (DSDT) that is a table defining the system configuration of the information processing device as a name space written in the ACPI Machine Language (AML). The DSDT is system configuration information defining the configuration of devices connected to the information processing device and represents each device included in the system configuration of the information processing device as an object in the name space. For example, the system configuration of the information processing device illustrated in FIG. 20 is defined as the name space illustrated in FIG. 23. As illustrated in FIG. 23, each device is represented by "¥_SB_" as a descendant object of a system bus tree in the name space.

As one rule of the ACPI table, firmware such as a BIOS passes the DSDT to the OS when the information processing device is activated. The OS can recognize the changed system configuration of the information processing device by interpreting the AML in the DSDT.

Moreover, the ACPI table in the ACPI specification includes Secondary System Description Table (SSDT) and OEM Table (OEMT) ("SSDT" and "OEMT" are together referred to as "OEMT etc.", hereinafter). The SSDT herein means a table in which a device (I/O device illustrated in FIG. 21) to be added to the information processing device is defined as the name space written in the AML as with the DSDT. The OEMT means a table (OEM Table) in which a definition block to be loaded using a LoadTable operator is defined. While the DSDT defines devices normally connected to the information processing device as objects in the name space, the OEMT etc. defines devices to be added later to the information processing device as objects in the name space.

As with the DSDT, firmware passes the OEMT etc. to the OS when the information processing device is activated. The OS can recognize the device to be added later to the information processing device by interpreting the AML in the OEMT etc.

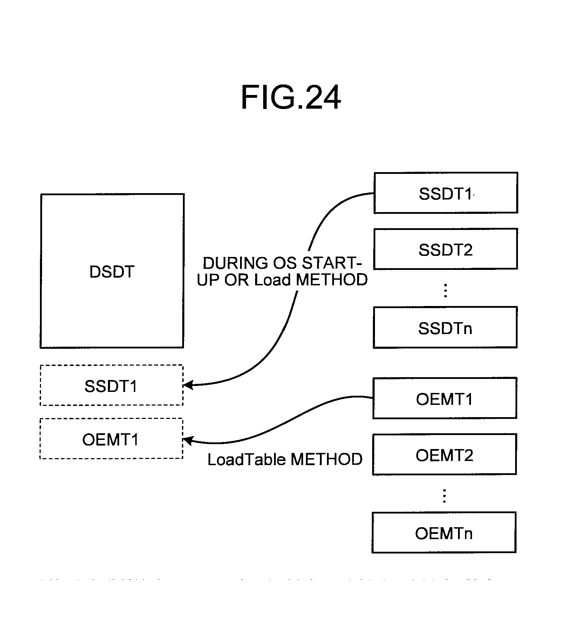

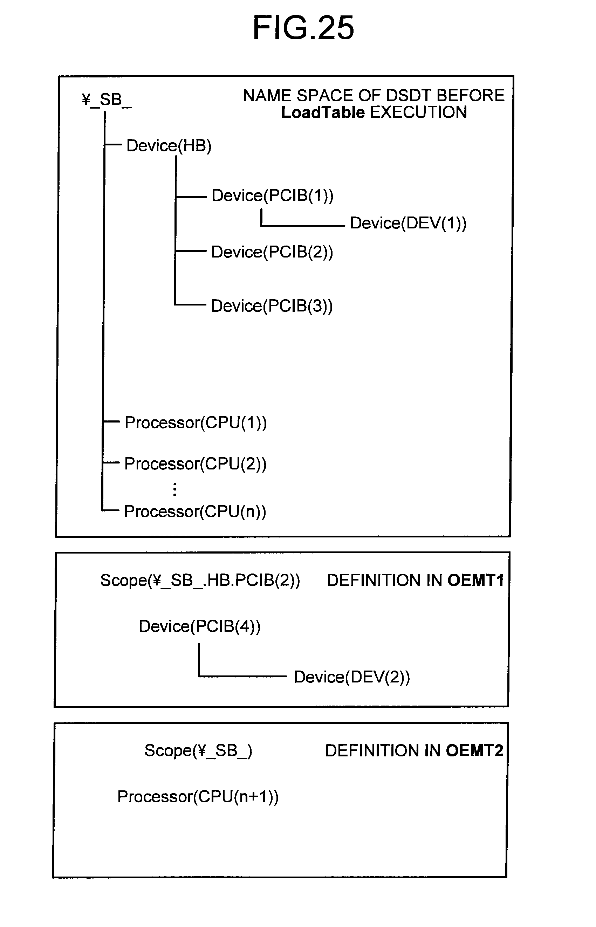

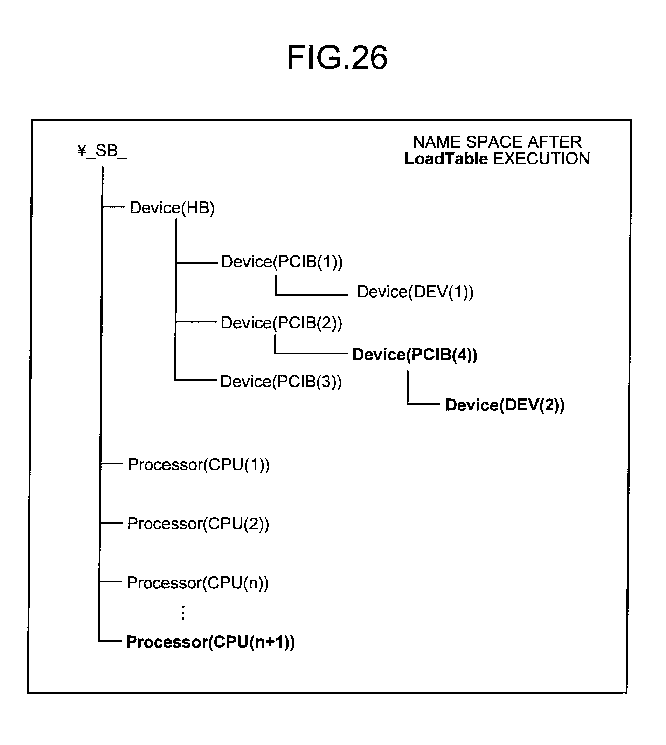

As illustrated in FIG. 24, in the conventional information processing devices, the firmware passes the DSDT and the OEMT etc. described above to the OS when the system configuration is changed due to addition of a device or the like. Subsequently, as illustrated in FIG. 25 and FIG. 26, the OS creates a new name space of the whole system whose system configuration has been changed to a new system configuration illustrated in FIG. 21 by adding the OEMT etc. to the DSDT. In such a manner, the conventional information processing devices recognize the system configuration by creating a name space of the whole system after the system is changed, as the ACPI table in the ACPI specification in conjunction with the OS and firmware.

Patent Document 1: Japanese Laid-open Patent Publication No. 2005-056404

### DISCLOSURE OF INVENTION

### PROBLEM TO BE SOLVED BY THE INVENTION

Currently, a great variety of types of OS are loaded on information processing devices, and some types of OS may not support function to change the name space defined in the ACPI table. More specifically, some types of OS may support the DSDT but may not support the OEMT etc.

Therefore, in the conventional information processing devices, even if the firmware passes the DSDT and the OEMT etc. to the OS when the system configuration is changed, the OS may be unable to interpret the AML in the OEMT, which may adversely result in the start-up failure.

The present invention is made in order to solve the problems of the conventional art described above. The present invention aims to provide an information processing device having a configuration changing function, a system configuration changing method, and a system configuration changing computer program, all of which are capable of ensuring the normal start-up of the OS when the system configuration is changed regardless of the type of OS, that is, the presence or absence of the support for the OEMT etc.

### MEANS FOR SOLVING PROBLEM

According to an aspect of an embodiment of the invention, an information processing device comprising a processing unit and a first storage device, wherein the first storage device includes device change information including difference information relative to first system configuration information defining a configuration of a device connected to the information processing device on each system configuration capable of being taken by the information processing device, and a first computer program causing the processing unit to function as: a device configuration information detecting unit detecting device configuration information that is device information after the device connected to the information processing device is changed; and a device configuration changing unit changing the first system configuration information into second system configuration information based on the device configuration information detected by the device configuration information detecting unit and the device change information.

### EFFECT OF THE INVENTION

When the system configuration is changed, effects allowing the OS to be normally started are exerted regardless of the type of OS, that is, the presence or absence of the support for the OEMT etc.

### BRIEF DESCRIPTION OF DRAWINGS

FIG. 1 is a block diagram of a structure of an information processing device according to a first embodiment.
FIG. 2 is a block diagram illustrating a state where an external device is added to the information processing device.
FIG. 3 is a block diagram illustrating a state where an external device is added to the information processing device.
FIG. 4 is a table indicating a format in the Advanced Configuration and Power Interface (ACPI) specification regarding Differentiated System Description Table (DSDT).
FIG. 5 is a schematic for illustrating an example of a structure of the DSDT illustrated in FIG. 1.
FIG. 6 is a conceptual schematic representing a hierarchical structure of an ACPI Machine Language (AML) portion of the DSDT illustrated in FIG. 5 as a name space in the ACPI specification.
FIG. 7 is a conceptual schematic illustrating an example of an action in which a device configuration changing unit changes the DSDT when firmware is executed.
FIG. 8 is a table indicating an example of an AML change table to be referred to when the device configuration changing unit changes the DSDT by invalidating an unnecessary device defined in the AML portion in the DSDT.
FIG. 9 is a schematic illustrating a state where the device configuration changing unit invalidates an unnecessary device defined in the AML portion in the DSDT by using the AML change table illustrated in FIG. 8.
FIG. 10 is a conceptual schematic representing a hierarchical structure of the AML portion of the DSDT illustrated in FIG. 9 as a name space in the ACPI specification.
FIG. 11 is a flowchart illustrating a process order of a system configuration changing process performed by the information processing device according to the first embodiment.
FIG. 12 is a schematic for illustrating an example of a process order of a DSDT changing process executed by the device configuration changing unit at Step S107.
FIG. 13 is a schematic illustrating a state where the device configuration changing unit invalidates an unnecessary device defined in the AML portion in the DSDT illustrated in FIG. 5 by executing the DSDT changing process illustrated in FIG. 12.
FIG. 14 is a conceptual schematic representing a hierarchical structure of the AML portion of the DSDT illustrated in FIG. 13 as a name space in the ACPI specification.
FIG. 15 is a flowchart for illustrating an example of a method for creating the AML change table illustrated in FIG. 8.
FIG. 16 is a table for illustrating an AML change table according to a second embodiment.
FIG. 17 is a schematic illustrating a state where the device configuration changing unit deletes an unnecessary device defined in the AML portion in the DSDT by using the AML change table illustrated in FIG. 16.
FIG. 18 is a conceptual schematic representing a hierarchical structure of the AML portion of the DSDT illustrated in FIG. 17 as a name space in the ACPI specification.
FIG. 19 is a schematic for illustrating an example of a process order of a DSDT changing process.
FIG. 20 is a block diagram for illustrating a conventional example.
FIG. 21 is a block diagram for illustrating a conventional example.
FIG. 22 is a block diagram for illustrating a conventional example.
FIG. 23 is a schematic for illustrating a conventional example.
FIG. 24 is a block diagram for illustrating a conventional example.
FIG. 25 is a schematic for illustrating a conventional example.
FIG. 26 is a schematic for illustrating a conventional example.

### EXPLANATIONS OF LETTERS OR NUMERALS

1 Information processing device
2 I/O device (input and output device)
3 I/O device (input and output device)
11 CPU(1) (central processing unit)
12 Device configuration information detecting unit
13 Device configuration changing unit
20 Main memory (second storage device)
21 OS (second computer program)
30 Flash memory (first storage device)
31 DSDT (first system configuration information, second system configuration information)
32 AML change table (device change information)
33 Firmware (first computer program)
132 AML change table (device change information)

### BEST MODE(S) FOR CARRYING OUT THE INVENTION

An information processing device having a configuration changing function, a system configuration changing method, and a system configuration changing computer program that are described in the present specification are described below with reference to the accompanying drawings. Embodiments below describe the information processing device described in the present specification as a device according to the Advanced Configuration and Power Interface (ACPI) specification, which is an industry standard specification regarding system configurations and power control of various information processing devices. However, embodiments are not limited to these, and the information processing device and the like that are described in the present specification are applicable to devices or the like according to any other specifications.

### First Embodiment

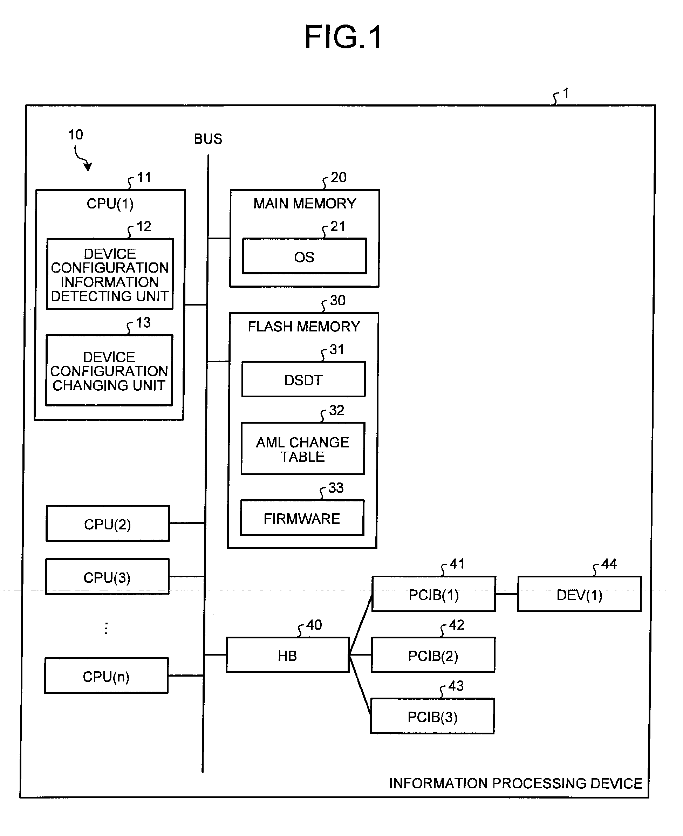

FIG. 1 is a block diagram of a structure of an information processing device according to a first embodiment. As illustrated in FIG. 1, an information processing device 1 includes a central processing unit (CPU) group 10, a main memory 20, and a flash memory 30 that are connected via a bus.

Moreover, the information processing device 1 includes a host bridge (HB) 40, a PCIB(1) 41 to PCIB(3) 43, and a DEV(1) 44. The HB 40 is a host bridge connected to the CPU group 10 via the bus. The PCIB(1) 41 to PCIB(3) 43 are peripheral component interconnect (PCI) root bridges or PCI express root bridges (hereinafter, referred to as "PCI root bridges etc.") that are connected to the HB 40. The DEV(1) 44 is a PCI device or a PCI express device (hereinafter, referred to as a "PCI device etc.") that is connected to the PCIB(1) 41. Three of the PCIB(1) 41 to PCIB(3) 43 and one DEV(1) 44 are illustrated for simplifying the description, but the numbers of them are not limited to these.

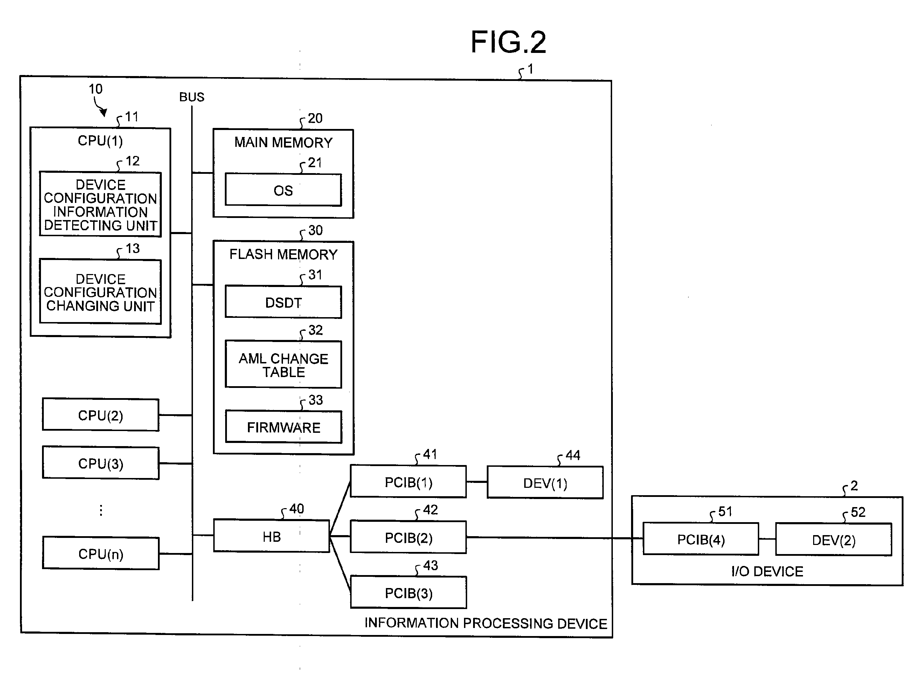

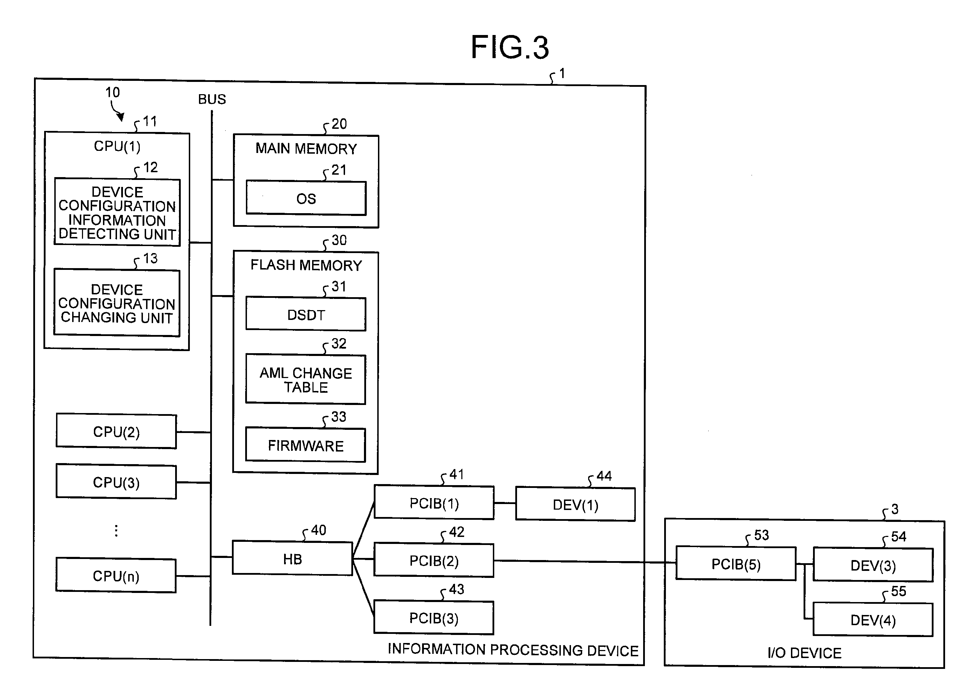

The information processing device 1 according to the present embodiment can take various system configurations by adding an external device or the like. FIG. 2 and FIG. 3 are block diagrams illustrating states where external devices are added to the information processing device 1.

For example, an input/output (I/O) device 2 is added and connected to the information processing device 1 illustrated in FIG. 2 as an external device. The I/O device 2 includes, for example, a PCIB(4) 51 as a PCI root bridges etc., and a DEV(2) 52 as a PCI device etc. that is connected to the PCIB(4). An I/O device 3 is added and connected as an external device to the information processing device 1 illustrated in FIG. 3. The I/O device 3 includes, for example, a PCIB(5) 53 as a PCIB device etc., and a DEV(3) 54 and a DEV(4) 55 as PCI devices etc. that are connected to the PCIB(5) 53.

The information processing device 1 according to the present embodiment includes a function to change the system configuration information stored in the device itself so as to comply with the changed system configuration when the system configuration is changed as described above.

The configuration of each unit of the information processing device 1 having a function to change the system configuration information stored in the device itself so as to comply with the changed system configuration when the system configuration is changed is specifically described below with reference to FIG. 1.

The CPU group 10 is a processing unit that performs a computation process such as execution of the OS in the information processing device 1. The CPU group 10 includes a CPU(1) to CPU(n) as n pieces of processing units of the information processing device 1. A CPU(1) 11 included in the CPU group 10 is a processing unit that reads out firmware 33 from the flash memory 30 to execute it and thus functions as a device configuration information detecting unit 12 and a device configuration changing unit 13.

The device configuration information detecting unit 12 detects device configuration information that is information for a device after the device connected to the information processing device 1 is changed. The device configuration changing unit 13 changes a differentiated system description table (DSDT) 31 that is system configuration information stored in the flash memory 30 based on the device configuration information detected by the device configuration information detecting unit 12 and an ACPI Machine Language (AML) change table 32 stored in the flash memory 30. The device configuration information detecting unit 12 and the device configuration changing unit 13 are described more in detail later.

The main memory 20 is a main storage unit of the information processing device 1 and stores therein an operating system (OS) 21. The OS 21 is basic software providing basic functions as a computer for the information processing device 1, such as a function to initialize the system of the information processing device 1, that is, each device of the CPU group 10, the main memory 20, the flash memory 30, and other devices. The OS 21 is read out and executed by the CPU(1) 11 and causes the CPU(1) 11 to function as a system control unit for accessing all devices connected to the information processing device 1.

The flash memory 30 is a nonvolatile memory that stores therein various computer programs to be executed by the CPU(1) 11 and various types of data referred to when the CPU(1) 11 executes computer programs. Specifically, the flash memory 30 stores therein the DSDT 31, the AML change table 32, and the firmware 33.

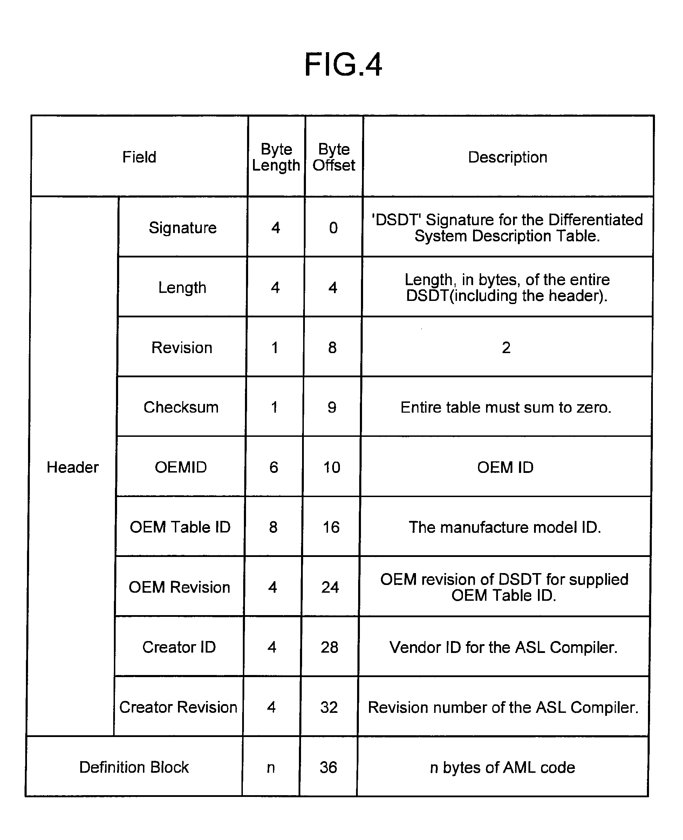

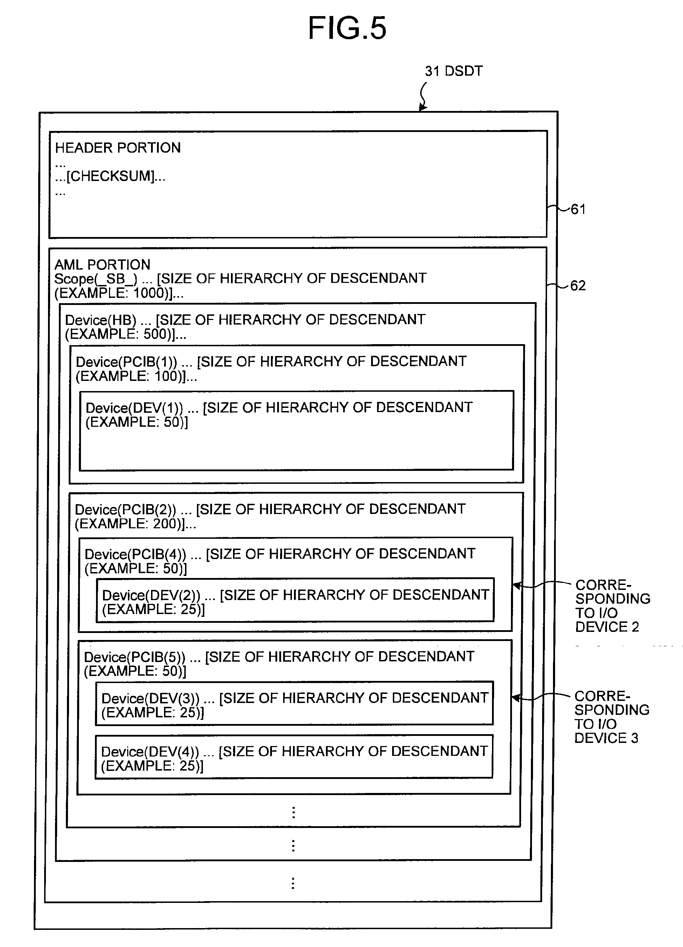

The DSDT 31 is system configuration information defining the configuration of the devices connected to the information processing device 1, for example, according to the format in the ACPI specification illustrated in FIG. 4. FIG. 5 is a schematic for illustrating an example of the structure of the DSDT 31 illustrated in FIG. 1. As illustrated in FIG. 5, the DSDT 31 includes a configuration according to the format in the ACPI specification illustrated in FIG. 4. Specifically, the DSDT 31 includes a header portion 61 and an AML portion 62. The header portion 61 stores therein a checksum that is a type of error detecting methods on the whole of the DSDT 31. The checksum herein means an error detecting method for detecting an error by calculating a checksum that is a total value of check object data, storing the checksum with the data in a memory, calculating a total value of data read out when the data is read out, and comparing the value with the checksum to detect an error.

The AML portion 62 defines the devices connected to the information processing device 1 as hierarchical structures written in the AML. Particularly, in the AML portion 62 of the DSDT 31 according to the present embodiment, all system configurations capable of being taken by the information processing device 1 are defined in the AML. The all system configurations capable of being taken by the information processing device 1 mean the so-called maximum configuration that covers configurations of all devices capable of being connected to the information processing device 1. Specifically, not only the basic system configuration of the information processing device 1 illustrated in FIG. 1, but also the following system configurations are defined in the AML portion 62 of the DSDT 31 according to the present embodiment: the system configuration of the information processing device 1 to which the I/O device 2 illustrated in FIG. 2 is added and connected as an external device and the system configuration of the information processing device 1 to which the I/O device 3 illustrated in FIG. 3 is added and connected as an external device.

For example, the PCIB(4) 51 of FIG. 2 and the PCIB(5) 53 of FIG. 3 are defined in the AML portion 62 in the DSDT 31 illustrated in FIG. 5, as descendants of the PCIB(2) 42 of FIG. 1 to represent that the I/O device 2 and the I/O device 3 can be connected as external devices to the information processing device 1.

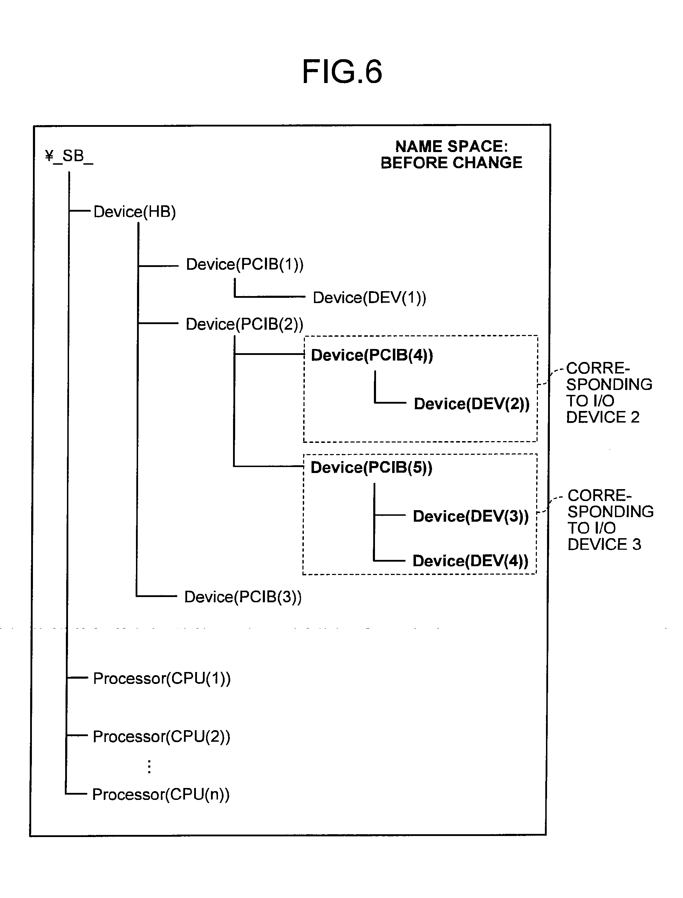

FIG. 6 is a conceptual schematic representing a hierarchical structure of the AML portion 62 of the DSDT 31 illustrated in FIG. 5 as a name space in the ACPI specification. Some devices such as the main memory 20 and the flash memory 30 are omitted in the name space illustrated in FIG. 6 for simplifying the description. The PCIB(4) 51 of FIG. 2 and the PCIB(5) 53 of FIG. 3 are defined in the name space illustrated in FIG. 6 as descendants of the PCIB(2) 42 of FIG. 1 to represent that the I/O device 2 and the I/O device 3 can be connected to the information processing device 1 as external devices.

Returning back to the description of FIG. 1, the AML change table 32 is device change information including difference information relative to the DSDT 31 on each system configuration capable of being taken by the information processing device 1 and is a table to be referred to by the device configuration changing unit 13 for changing the DSDT 31. In other words, the AML change table 32 is a table in which, among the devices included in the system configuration defined in the AML portion 62 of the DSDT 31, a device to be unnecessary when a new device is added to the information processing device 1 is updated on each individual new device. Hereinafter, the device to be unnecessary among the devices included in the system configuration defined in the AML portion 62 of the DSDT 31 is called an "unnecessary device in the DSDT 31". The AML change table 32 is described more in detail later.

The firmware 33 is a software computer program such as a basic input output system (BIOS) including a basic input and output function. The firmware 33 is a system configuration changing computer program that is executed by the CPU(1) 11 when the information processing device 1 is powered on and that causes the CPU(1) 11 to function as the device configuration information detecting unit 12 and the device configuration changing unit 13.

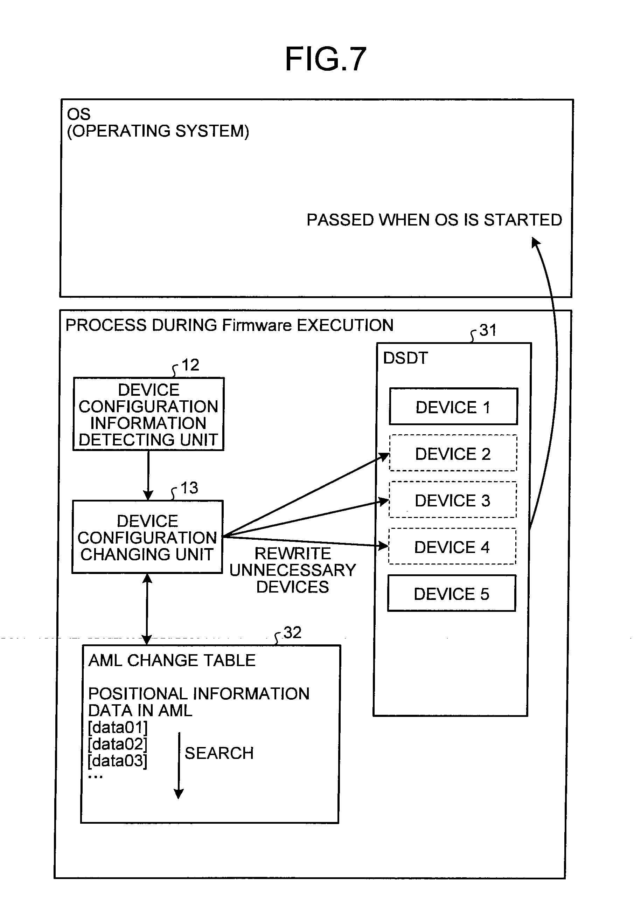

The device configuration information detecting unit 12, the device configuration changing unit 13, and the AML change table 32 according to the present embodiment are described in detail below. FIG. 7 is a conceptual schematic illustrating an example of an action in which the device configuration changing unit 13 changes the DSDT 31 when the firmware 33 is executed.

As illustrated in FIG. 7, the CPU(1) 11 reads out the firmware 33 from the flash memory 30 to execute it to cause the device configuration information detecting unit 12 and the device configuration changing unit 13 to be in an execution state.

The device configuration information detecting unit 12 recognizes all devices connected to the information processing device 1 when the information processing device 1 is powered on and detects the information of these devices as the device configuration information. For example, the device configuration information detecting unit 12 recognizes basic devices such as the CPU group 10, the main memory 20, the flash memory 30, and the HB 40 that are illustrated in FIG. 1 and detects the information of these basic devices as the device configuration information. The device configuration information detecting unit 12 recognizes, besides the basic devices, devices newly added to the information processing device 1, such as the I/O device 2 illustrated in FIG. 2 and the I/O device 3 illustrated in FIG. 3, and detects the information of such newly added device as the device configuration information. The device configuration information detecting unit 12 also provides notification of the detected device configuration information to the device configuration changing unit 13.

The device configuration changing unit 13 receives the information of the newly added device from the device configuration information detecting unit 12 as the device configuration information, searches through the AML change table 32, and obtains the information of the unnecessary device in the DSDT 31 corresponding to this device. The device configuration changing unit 13 also changes the DSDT 31 by rewriting the unnecessary device defined in the AML portion 62 in the DSDT 31 according to the obtained information of the unnecessary device in the DSDT 31. Particularly, in the present embodiment, the device configuration changing unit 13 invalidates the unnecessary device defined in the AML portion 62 in the DSDT 31 to change the DSDT 31. The firmware 33 passes the DSDT 31 changed by the device configuration changing unit 13 to the OS 21 when the OS 21 is started.

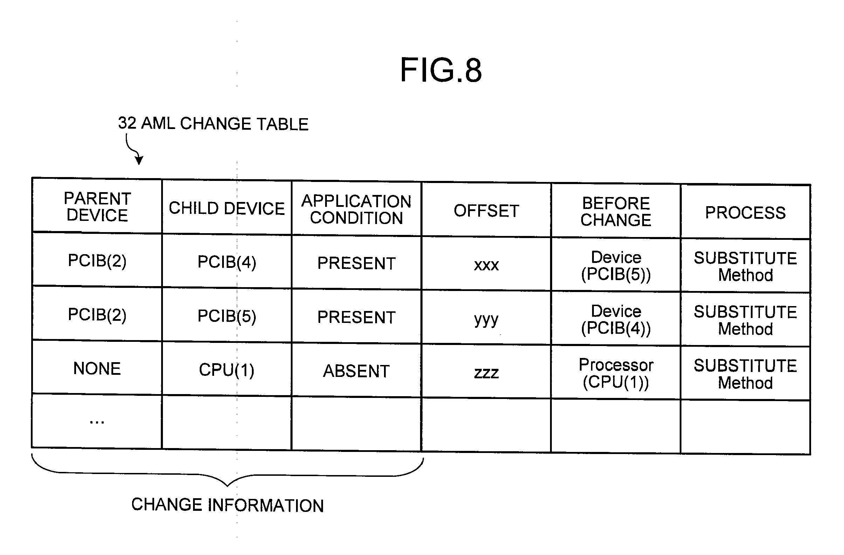

FIG. 8 is a table indicating an example of the AML change table 32 to be referred to when the device configuration changing unit 13 changes the DSDT 31 by invalidating the unnecessary device defined in the AML portion 62 in the DSDT 31. As illustrated in FIG. 8, the AML change table 32 is a table including columns of six elements of a "parent device", a "child device", an "application condition", an "offset", "before change", and a "process".

The column of the element "parent device" indicates an identifier of a device (parent device) to which a device may be newly added as a descendant in the hierarchical structure of the name space when the hierarchical structure of the AML portion 62 in the DSDT 31 is represented as the name space.

The column of the element "child device" indicates an identifier of a device (child device) that may be newly added as a descendant of the parent device. When a plurality of child devices are connected to one parent device as descendants, identifiers of the child devices may be listed in the column of the element "child device".

The column of the element "application condition" indicates conditions for determining whether to let the device configuration changing unit 13 refer to the three elements "offset", "before change", and "process" that are elements following the element "application condition". "Present" means that the child device is present as a descendant of the parent device, and "absent" means that the child device is not present as a descendant of the parent device. For example, in the example illustrated in FIG. 8, if a condition in which the child device "PCIB(4)" is present as a descendant of the parent device "PCIB(2)" is satisfied, the device configuration changing unit 13 refers to each column of the elements "offset", "before change", and "process" following the element "application condition".

Hereinafter, the information listed in each column of these three elements "parent device", "child device", and "application condition" is collectively called change information.

The element "offset" indicates positional information, in the AML portion 62 in the DSDT 31, of the unnecessary device defined in the AML portion 62 in the DSDT 31.

The element "before change" indicates information of the unnecessary device defined in the AML portion 62 in the DSDT 31.

The element "process" indicates a process executed by the device configuration changing unit 13 when the unnecessary device defined in the AML portion 62 in the DSDT 31 is invalidated. For example, "substitute Method" indicated in FIG. 8 means that the device configuration changing unit 13 substitutes Method specifying a process defined by the ACPI specification for the device listed in the element "before change".

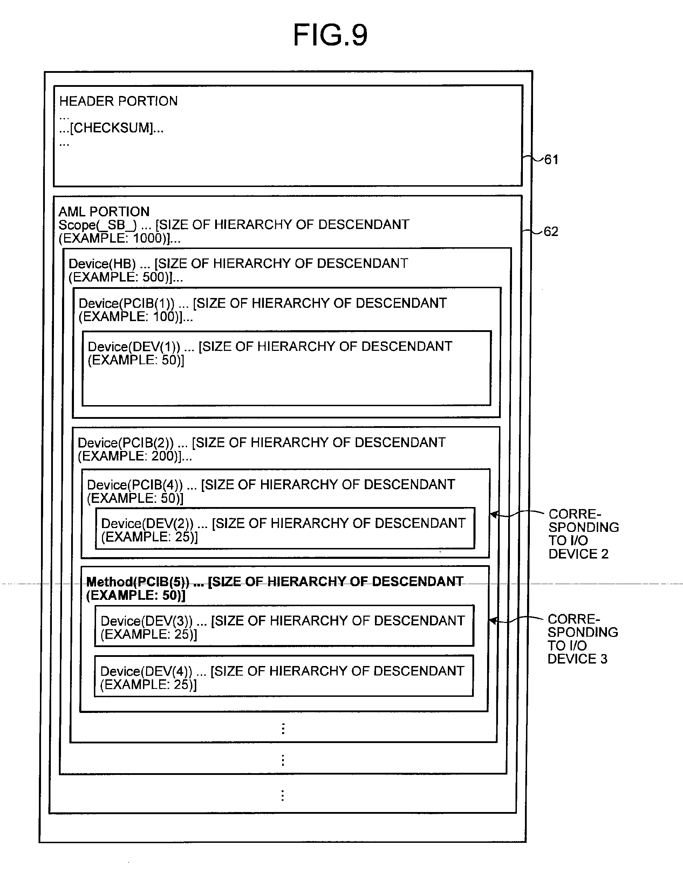

Subsequently, an example of a process in which the device configuration changing unit 13 invalidates the unnecessary device defined in the AML portion 62 in the DSDT 31 is described using the AML change table 32 illustrated in FIG. 8. FIG. 9 is a schematic illustrating a state where the device configuration changing unit 13 invalidates the unnecessary device defined in the AML portion 62 in the DSDT 31 by using the AML change table 32 illustrated in FIG. 8. FIG. 9 illustrates a case where the device configuration changing unit 13 invalidates the unnecessary device defined in the AML portion 62 in the DSDT 31 illustrated in FIG. 5. As an example, FIG. 9 illustrates a case where the device configuration information-detecting unit 12 detects information of all devices connected to the information processing device 1 illustrated in FIG. 2 as the device configuration information when the information processing device 1 is powered on.

The device configuration changing unit 13 receives the device configuration information from the device configuration information detecting unit 12, refers to the AML change table 32 illustrated in FIG. 8, and confirms that the child device "PCIB(4)" is present as a descendant of the parent device "PCIB(2)". As illustrated in FIG. 9, the device configuration changing unit 13 substitutes Method defined by the ACPI specification for the PCIB(5) that is a device being present at a XXX position in the DSDT 31. In such a manner, the device configuration changing unit 13 invalidates devices of the PCIB(5) and the descendant thereof (that is, the I/O device 3 of FIG. 3) that are devices unconnected to the information processing device 1 illustrated in FIG. 2, as the unnecessary devices defined in the AML portion 62 in the DSDT 31. FIG. 9 illustrates an example in which Method (PCIB(5)) is substituted for Device (PCIB(5)) and illustrates an embodiment from which substitution of "NoopOp" for the element listed in Method (PCIB(5)) is omitted.

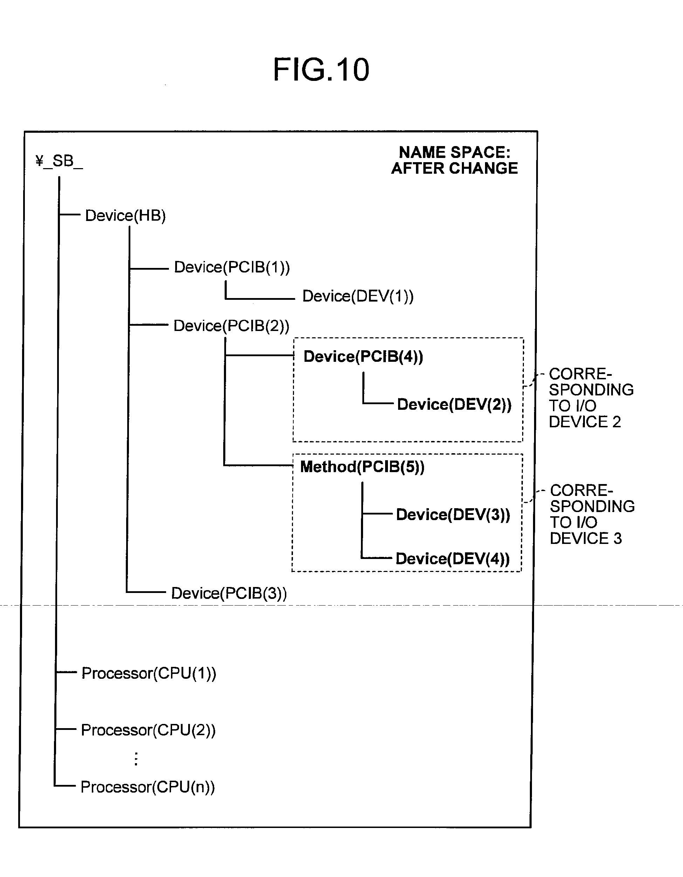

FIG. 10 is a conceptual schematic representing a hierarchical structure of the AML portion 62 of the DSDT 31 illustrated in FIG. 9 as a name space in the ACPI specification. Some devices such as the main memory 20 and the flash memory 30 are omitted in the name space illustrated in FIG. 10 for simplifying the description. Method is substituted for the PCIB(5) unconnected to the information processing device 1 illustrated in FIG. 2 in the name space illustrated in FIG. 10 to invalidate the I/O device 3 of FIG. 3. FIG. 10 illustrates an example in which Method (PCIB(5)) is substituted for Device (PCIB(5)) and illustrates an embodiment from which substitution of "NoopOp" for the elements listed in Method (PCIB(5)) is omitted.

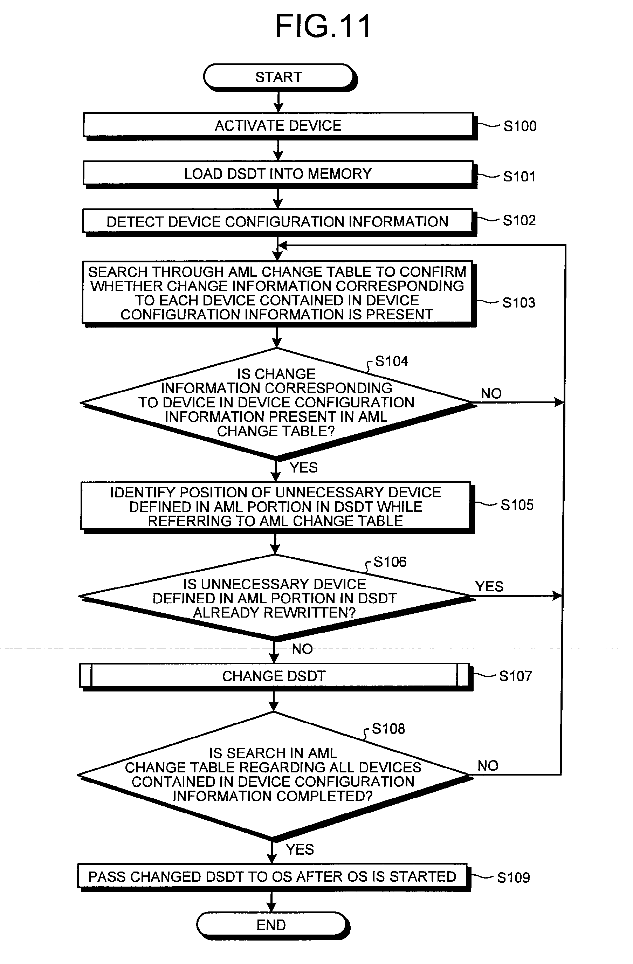

A system configuration changing process performed by the information processing device 1 according to the present embodiment is described below. FIG. 11 is a flowchart illustrating a process order of the system configuration changing process performed by the information processing device according to the present embodiment.

As illustrated in FIG. 11, the information processing device 1 is powered on to be activated (Step S100). Specifically, the CPU(1) 11 reads out the firmware 33 from the flash memory 30 to execute it to cause the device configuration information detecting unit 12 and the device configuration changing unit 13 to be in an execution state.

The CPU(1) 11 executes the firmware 33, reads out the DSDT 31 from the flash memory 30, and loads it into a predetermined memory (Step S101). The device configuration information detecting unit 12 detects information of all devices connected to the information processing device 1 as the device configuration information (Step S102).

The device configuration changing unit 13 searches through the AML change table 32 to confirm whether change information corresponding to each device contained in the device configuration information is present (Step S103).

Subsequently, the device configuration changing unit 13 judges whether the change information corresponding to the device in the device configuration information is present in the AML change table 32 (Step S104). For example, this judgment is performed by judging whether a condition in which the child device "PCIB(4)" is present as a descendant of the parent device "PCIB(2)" is satisfied in the AML change table 32 illustrated in FIG. 8.

Consequently, if the change information corresponding to the device in the device configuration information is absent in the AML change table 32 (No at Step S104), the device configuration changing unit 13 returns the process to Step S103.

In contrast, if the change information corresponding to the device in the device configuration information is present in the AML change table 32 (Yes at Step S104), the device configuration changing unit 13 refers to the AML change table 32 to identify the position of the unnecessary device defined in the AML portion 62 in the DSDT 31 (Step S105). For example, the device configuration changing unit 13 identifies the position of the unnecessary device defined in the AML portion 62 in the DSDT 31 using the positional information described in the element "offset" of the AML change table 32 illustrated in FIG. 8.

Subsequently, the device configuration changing unit 13 judges whether the unnecessary device defined in the AML portion 62 in the DSDT 31 is already rewritten (Step S106). In the present embodiment, the device configuration changing unit 13 judges whether Method defined by the ACPI specification is already substituted for the unnecessary device defined in the AML portion 62 in the DSDT 31.

Consequently, when judging that the unnecessary device defined in the AML portion 62 in the DSDT 31 is already rewritten (Yes at Step S106), the device configuration changing unit 13 returns the process to Step S103.

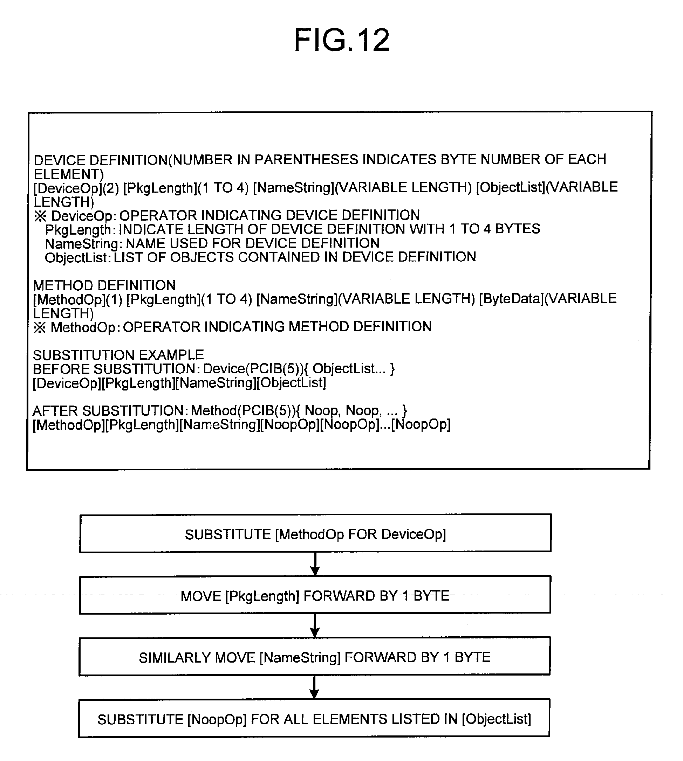

In contrast, when judging that the unnecessary device defined in the AML portion 62 in the DSDT 31 is not yet rewritten (No at Step S106), the device configuration changing unit 13 executes a DSDT changing process for changing the DSDT 31 (Step S107). The DSDT changing process at Step S107 is described later in detail with reference to FIG. 12 to FIG. 14.

The device configuration changing unit 13 then judges whether the search in the AML change table 32 regarding all devices contained in the device configuration information is completed (Step S108). Consequently, when judging that the search in the AML change table 32 regarding all devices contained in the device configuration information is not completed (No at Step S108), the device configuration changing unit 13 returns the process to Step S103. In contrast, when judging that the search in the AML change table 32 regarding all devices contained in the device configuration information is completed (Yes at Step S108), the device configuration changing unit 13 shifts the process to Step S109.

At Step S109, the CPU(1) 11 causes the OS 21 to be started from the main memory 20, passes the DSDT 31 changed by the DSDT changing process at Step S107 to the OS 21 (Step S109), and terminates the system configuration changing process.

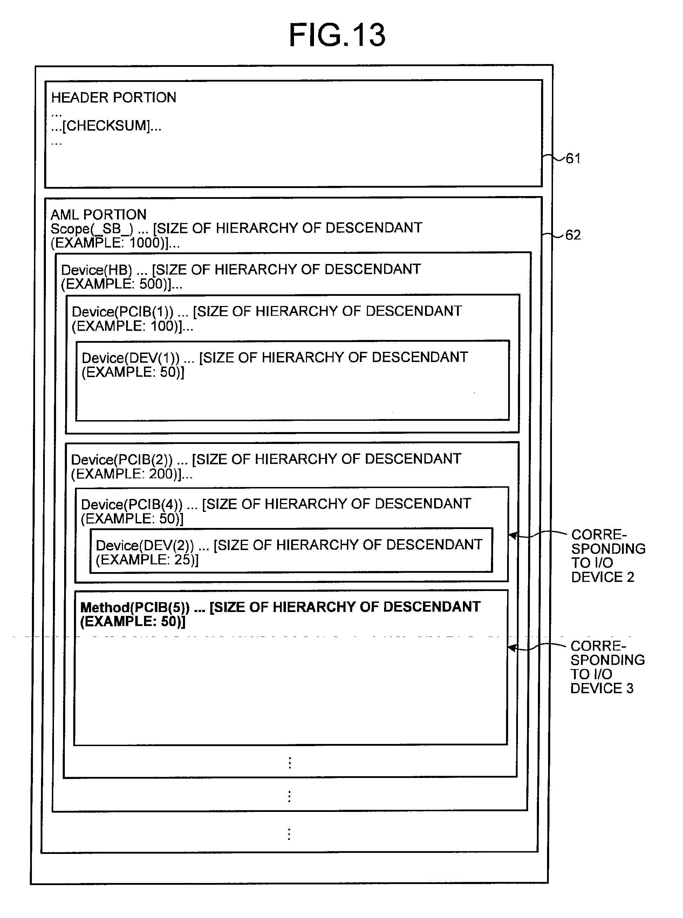

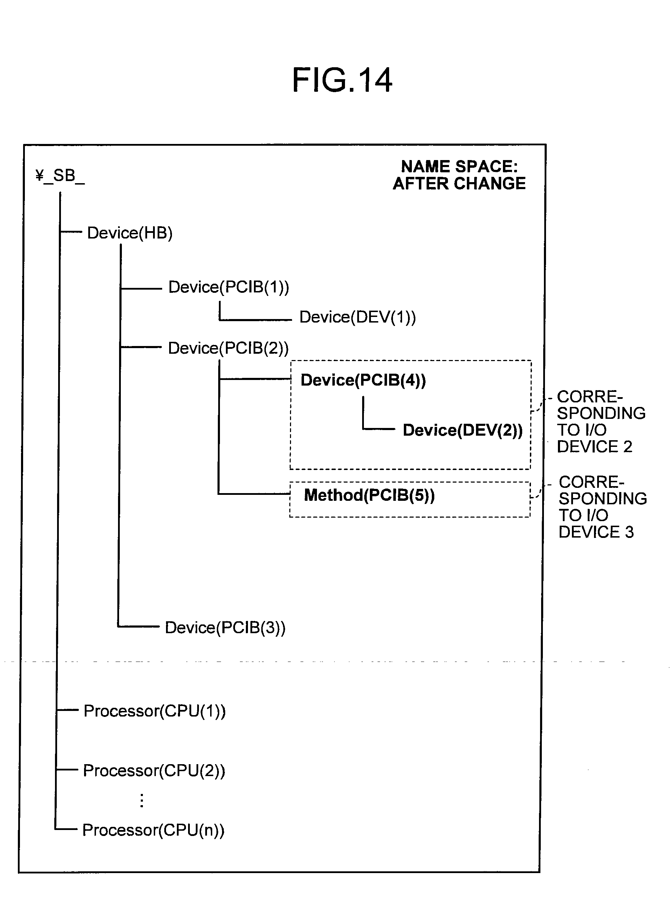

The DSDT changing process performed by the device configuration changing unit 13 at Step S107 is described below with reference to FIG. 12 to FIG. 14. FIG. 12 is a schematic for illustrating an example of a process order of the DSDT changing process performed by the device configuration changing unit 13 at Step S107. FIG. 13 is a schematic illustrating a state where the device configuration changing unit 13 invalidates the PCIB(5) that is the unnecessary device defined in the AML portion 62 in the DSDT 31 illustrated in FIG. 5 by executing the DSDT changing process illustrated in FIG. 12. FIG. 14 is a conceptual schematic representing a hierarchical structure of the AML portion 62 of the DSDT 31 illustrated in FIG. 13, as a name space in the ACPI specification.

As illustrated in FIG. 12, MethodOp is substituted for DeviceOp. [PkgLength] is moved forward by 1 byte. DeviceOp is 2 bytes and MethodOp is 1 byte, and thus, 1 byte as a gap of them can be filled. While [PkgLength] is moved forward by 1 byte, 1 byte may be added to the package length indicated by [PkgLength].

Subsequently, [NameString] is moved forward by 1 byte. Thus, 1 byte generated when [PkgLength] is moved forward by 1 byte can be filled. As described above, when the length of [PkgLength] itself increases by 1 byte by adding 1 byte to the package length indicated by [PkgLength], [NameString] does not need to be moved.

Finally, [NoopOp] is substituted for all elements listed in [ObjectList]. [NoopOp] is an operator of 1 byte and means that any actions are not performed.

Accordingly, as illustrated in FIG. 13 and FIG. 14, the device configuration changing unit 13 can substitute the Method definition of PCIB(5) "Method (PCIB(5))" for the Device definition of PCIB(5) "Device (PCIB(5))" illustrated in FIG. 5. In other words, the PCIB(5) that is the unnecessary device defined in the AML portion 62 in the DSDT 31 illustrated in FIG. 5 can be invalidated.

FIG. 12 to FIG. 14 illustrate the case where MethodOp is substituted for Device0p of the Device definition of PCIB(5) "Device (PCIB(5))" illustrated in FIG. 5, and then, [NoopOp] is substituted for all of the elements listed in [ObjectList], but the substitution of [NoopOp] can also be omitted. In this case, as illustrated in FIG. 9 and FIG. 10, the device configuration changing unit 13 can substitute the Method definition of PCIB(5) "Method (PCIB(5))" for the Device definition of PCIB(5) "Device (PCIB(5))" illustrated in FIG. 5.

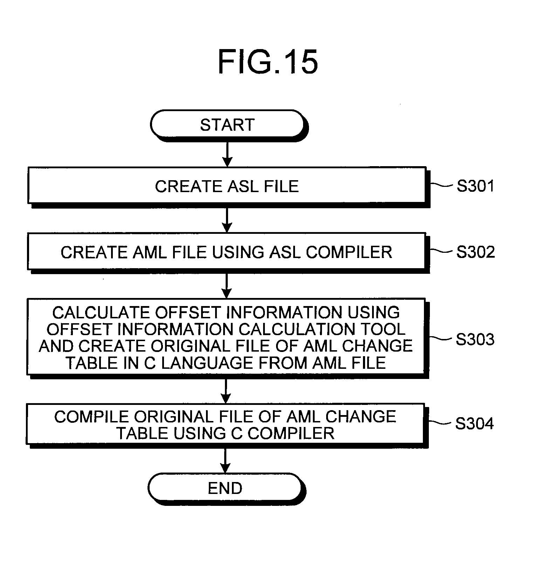

A method for creating the AML change table 32 illustrated in FIG. 8 is described below. FIG. 15 is a flowchart for illustrating an example of a method for creating the AML change table 32 illustrated in FIG. 8. As illustrated in FIG. 15, an ACPI source language (ASL) file corresponding to the AML portion 62 in the DSDT 31 is created for creating the AML change table 32 (Step S301).

An AML file corresponding to the AML portion 62 in the DSDT 31 is created by compiling the ASL file mentioned above using an ASL compiler (Step S302). Subsequently, an offset information calculation tool is applied to the AML file mentioned above to calculate positional information, in the AML portion 62 in the DSDT 31, of the unnecessary device defined in the AML portion 62 in the DSDT 31 as information (offset information) to be stored in the element "offset" illustrated in FIG. 8. At the same time, an original file of the AML change table 32 written in C language is created from the AML file (Step S303). Finally, the AML change table 32 is created by compiling the original file of the AML change table 32 using a C compiler (Step S304).

In such a manner, the AML change table 32 of FIG. 8 storing the offset information in the element "offset" can be completed. Thus, the AML change table 32 of the present embodiment includes the offset information, and therefore, the device configuration changing unit 13 can efficiently identify the position, in the AML portion 62 in the DSDT 31, of the unnecessary device defined in the AML portion 62 in the DSDT 31. As a result, the speed of the DSDT changing process executed by the device configuration changing unit 13 can be enhanced.

As described above, in the present embodiment, the maximum configuration that covers all system configurations capable of being taken by the information processing device 1 is defined in the DSDT 31, and the device configuration changing unit 13 changes the DSDT 31 by invalidating the unnecessary device from the DSDT 31 when the information processing device 1 is powered on. The firmware 33 then passes the changed DSDT 31 to the OS 21. Therefore, even if the OS 21 supports the DSDT in the ACPI specification but does not support Secondary System Description Table (SSDT) and OEM Table (OEMT) when the system configuration of the information processing device 1 is changed, the normal start-up of the OS 21 can be ensured. In other words, the normal start-up of the OS can be ensured when the system configuration is changed regardless of the type of OS.

### Second Embodiment

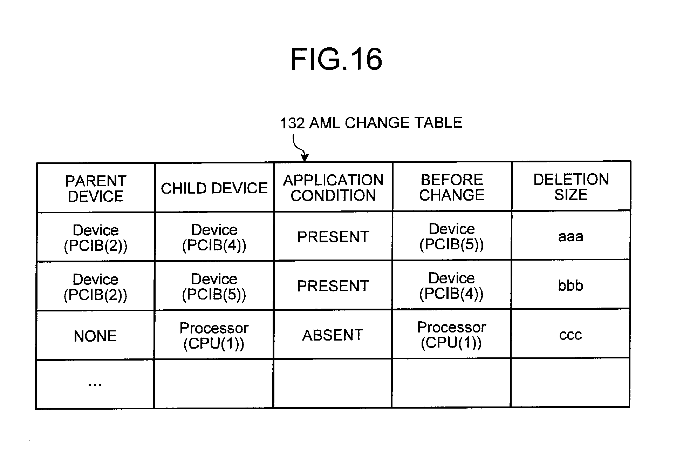

The information processing device 1 according to a second embodiment is described below. The present embodiment differs from the first embodiment in a function of changing the DSDT 31. More specifically, in the first embodiment, the device configuration changing unit 13 invalidates the unnecessary device from the DSDT 31 to change the DSDT 31. However, in the present embodiment, the device configuration changing unit 13 deletes the unnecessary device from the DSDT 31 to change the DSDT 31. For implementing this function, the information processing device 1 according to the present embodiment includes an AML change table 132 illustrated in FIG. 16 instead of the AML change table 32 illustrated in FIG. 8. The other configurations are basically the same as those of the first embodiment, and therefore, the detailed description regarding the configurations identical with those of the first embodiment is omitted.

FIG. 16 is a table for illustrating the AML change table 132 according to the present embodiment. The AML change table 132 is a table to be referred to by the device configuration changing unit 13 while the device configuration changing unit 13 changes the DSDT 31 by deleting the unnecessary device defined in the AML portion 62 in the DSDT 31.

As illustrated in FIG. 16, the AML change table 132 is a table in which five elements of a "parent device", a "child device", an "application condition", "before change", and a "deletion size" are combined. Among the five elements, the four elements of the "parent device", the "child device", the "application condition", and the "before change" are same as those in the AML change table 32 illustrated in FIG. 8, and thus, the detailed description thereof is omitted.

The element "deletion size" indicates the size of the hierarchy of the descendant of the device listed in the element "before change", that is, the size of the hierarchy of the descendant of the unnecessary device defined in the AML portion 62 in the DSDT 31.

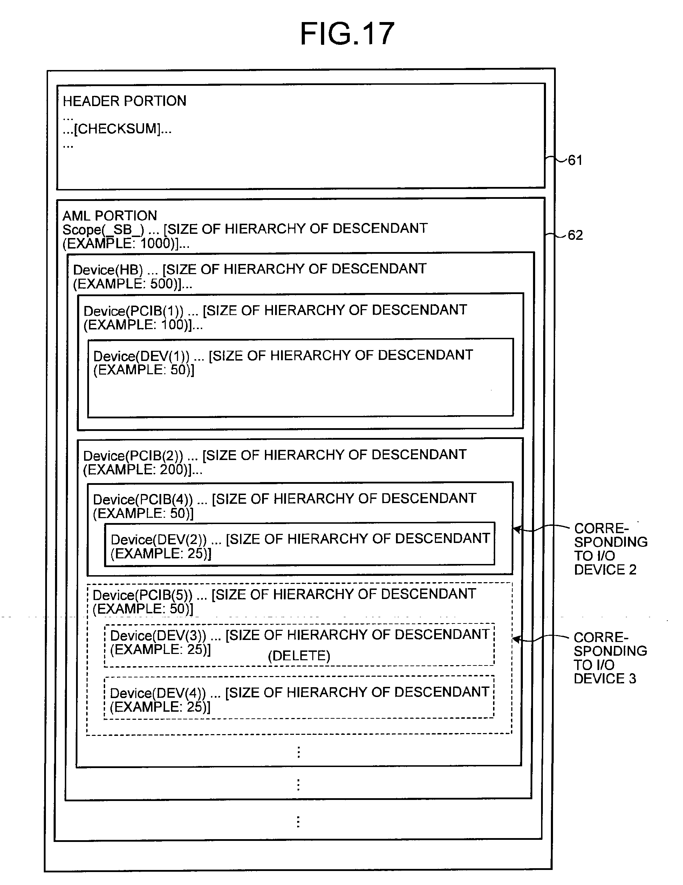

Subsequently, an example of a process in which the device configuration changing unit 13 deletes the unnecessary device defined in the AML portion 62 in the DSDT 31 is described using the AML change table 132 illustrated in FIG. 16. FIG. 17 is a schematic illustrating a state where the device configuration changing unit 13 deletes the unnecessary device defined in the AML portion 62 in the DSDT 31 using the AML change table 132 illustrated in FIG. 16. FIG. 17 illustrates a case where the device configuration changing unit 13 deletes the unnecessary device defined in the AML portion 62 in the DSDT 31 illustrated in FIG. 5. In FIG. 17, the device configuration information detecting unit 12 detects information of all devices connected to the information processing device 1 illustrated in FIG. 2 as the device configuration information when the information processing device 1 is powered on.

The device configuration changing unit 13 receives the device configuration information from the device configuration information detecting unit 12, refers to the AML change table 132 illustrated in FIG. 16, and confirms that the child device "PCIB(4)" is present as a descendant of the parent device "PCIB(2)". As illustrated in FIG. 17, the device configuration changing unit 13 then deletes "PCIB(5)" in which the size of the hierarchy of its descendant is "aaa" (aaa=50 bytes in the example of FIG. 17). In such a manner, the device configuration changing unit 13 deletes devices of the PCIB(5) and the descendants thereof (that is, the I/O device 3 of FIG. 3) that are devices unconnected to the information processing device 1 illustrated in FIG. 2, as the unnecessary devices defined in the AML portion 62 in the DSDT 31.

The device configuration changing unit 13 deletes the devices of the PCIB(5) and the descendants thereof and then reduces the size of the hierarchy higher than that of the PCIB(5) by the size of the hierarchy of the descendants of the PCIB(5): "aaa"=50 bytes. The device configuration changing unit 13 also changes a checksum in the header portion 61.

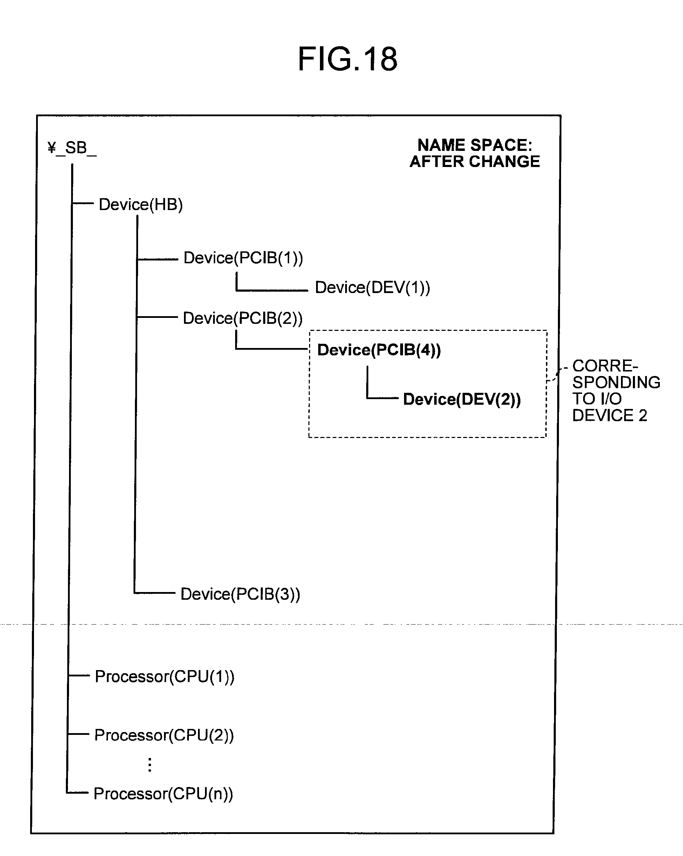

FIG. 18 is a conceptual schematic representing a hierarchical structure of the AML portion 62 of the DSDT 31 illustrated in FIG. 17 as a name space in the ACPI specification. Some devices such as the main memory 20 and the flash memory 30 are omitted in the name space illustrated in FIG. 18 for simplifying the description. In the name space illustrated in FIG. 18, the PCIB(5) unconnected to the information processing device 1 illustrated in FIG. 2 is deleted to delete the I/O device 3 of FIG. 3.

A system configuration changing process performed by the information processing device 1 according to the present embodiment is described below. The system configuration changing process according to the present embodiment differs from that of the first embodiment in processing details of the DSDT changing process at Step S107 illustrated in FIG. 11. The other processes are basically the same as those of the first embodiment, and therefore, the detailed description regarding the processes identical with those of the first embodiment is omitted.

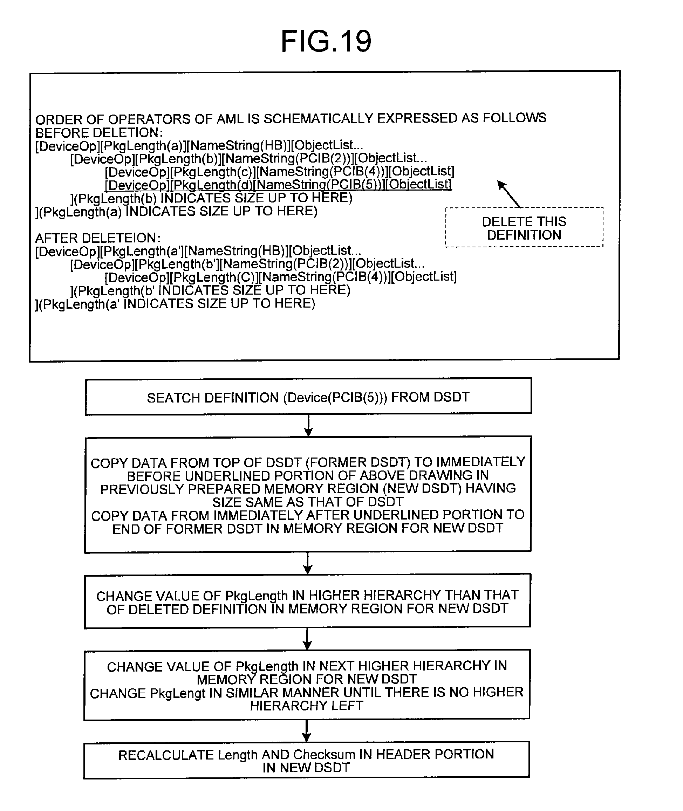

FIG. 19 is a schematic for illustrating an example of a process order of the DSDT changing process at Step S107. FIG. 19 illustrates a case where the device configuration changing unit 13 deletes Device definition of PCIB(5) "Device (PCIB(5))" illustrated in FIG. 5.

As illustrated in FIG. 19, Device definition "Device (PCIB(5))" is searched for from the AML portion 62 in the DSDT 31. Subsequently, data from the top of the DSDT 31 (including the header portion 61 in the DSDT 31) to immediately before the underlined portion illustrated in FIG. 19 is copied in a previously prepared memory region (hereinafter, referred to as a "memory region for a new DSDT") having a size same as that of the DSDT 31. At the same time, data from immediately after the underlined portion illustrated in FIG. 19 to the end of the AML portion 62 in the DSDT 31 is copied in the memory region for the new DSDT. Thus, a portion in which the underlined portion illustrated in FIG. 19 is deleted from the DSDT 31 is stored in the memory region for the new DSDT.

The value of PkgLength in a higher hierarchy than that of the deleted definition (that is, the underlined portion illustrated in FIG. 19) is changed in the memory region for the new DSDT. More specifically, the PkgLength (b) is changed to be reduced by the size of the deleted definition ("aaa" indicated in FIG. 16).

Subsequently, the value of PkgLength in the next higher hierarchy is changed in the memory region for the new DSDT. More specifically, the PkgLength (a) is changed to be reduced by the size of the deleted definition ("aaa" indicated in FIG. 16). The value of PkgLength is changed in a similar manner until there is no higher hierarchy left.

Finally, Length and Checksum in the header portion 61 in the DSDT 31 that are copied in the memory region for the new DSDT are recalculated.

In such a manner, the device configuration changing unit 13 can delete the Device definition of PCIB(5) "Device (PCIB(5))" illustrated in FIG. 5.

As described above, in the present embodiment, all system configurations capable of being taken by the information processing device 1 are defined in the DSDT 31, and the device configuration changing unit 13 changes the DSDT 31 by deleting unnecessary devices from the DSDT 31 when the information processing device 1 is powered on. The firmware 33 then passes the changed DSDT 31 to the OS 21. Therefore, even if the OS 21 supports the DSDT in the ACPI specification but does not support the SSDT and OEMT when the system configuration of the information processing device 1 is changed, the normal start-up of the OS 21 can be ensured. In other words, the normal start-up of the OS can be ensured when the system configuration is changed regardless of the type of OS.

## Claims

1. An information processing device comprising a processing unit and a first storage device, wherein
the first storage device includes
device change information including difference information relative to first system configuration information defining a configuration of a device connected to the information processing device on each system configuration capable of being taken by the information processing device, and
a first computer program causing the processing unit to function as:
a device configuration information detecting unit detecting device configuration information that is device information after the device connected to the information processing device is changed; and
a device configuration changing unit changing the first system configuration information into second system configuration information based on the device configuration information detected by the device configuration information detecting unit and the device change information.

2. The information processing device according to claim 1, wherein
all system configurations capable of being taken by the information processing device are defined in the first system configuration information, and
the device configuration changing unit invalidates an unnecessary system configuration from the first system configuration information to change the first system configuration information into the second system configuration information.

3. The information processing device according to claim 1, wherein
all system configurations capable of being taken by the information processing device are defined in the first system configuration information, and
the device configuration changing unit deletes an unnecessary system configuration from the first system configuration information to change the first system configuration information into the second system configuration information.

4. The information processing device according to claim 1, further comprising an input and output device and a second storage device, wherein
the second storage device includes
a second computer program causing the processing unit to function as a system control unit that accesses the processing unit, the first storage device, or the input and output device based on the second system configuration information.

5. The information processing device according to claim 4, wherein
the second system configuration information defines the processing unit, the first storage device, or the input and output device in a hierarchical structure to be accessed by the system control unit.

6. The information processing device according to claim 1, wherein
the device connected to the information processing device is changed when the information processing device is powered on.

7. A system configuration changing method of an information processing device in which a first storage device included in the information processing device stores therein device change information including difference information relative to first system configuration information defining a configuration of a device connected to the information processing device on each system configuration capable of being taken by the information processing device, the system configuration changing method comprising:
detecting device configuration information that is device information after the device connected to the information processing device is changed, by a processing unit included in the information processing device; and
changing the first system configuration information into second system configuration information by the processing unit included in the information processing device based on the device configuration information detected by the processing unit and the device change information stored in the first storage device.

8. The system configuration changing method according to claim 7, wherein
all system configurations capable of being taken by the information processing device are defined in the first system configuration information, and
an unnecessary system configuration is invalidated from the first system configuration information to change the first system configuration information into the second system configuration information at the changing of the first system configuration information into the second system configuration information by the processing unit based on the device configuration information detected by the processing unit and the device change information stored in the first storage device.

9. The system configuration changing method according to claim 7, wherein
all system configurations capable of being taken by the information processing device are defined in the first system configuration information, and
an unnecessary system configuration is deleted from the first system configuration information to change the first system configuration information into the second system configuration information at the changing of the first system configuration information into the second system configuration information by the processing unit based on the device configuration information detected by the processing unit and the device change information stored in the first storage device.

10. A system configuration changing computer program of an information processing device in which a first storage device included in the information processing device stores therein device change information including difference information relative to first system configuration information defining a configuration of a device connected to the information processing device on each system configuration capable of being taken by the information processing device, the system configuration changing computer program causing a processing unit included in the information processing device to function as:
a device configuration information detecting unit detecting device configuration information that is device information after the device connected to the information processing device is changed; and
a device configuration changing unit changing the first system configuration information into second system configuration information based on the device configuration information detected by the device configuration information detecting unit and the device change information stored in the first storage device.

11. The system configuration changing computer program according to claim 10, wherein
all system configurations capable of being taken by the information processing device are defined in the first system configuration information, and
the device configuration changing unit invalidates an unnecessary system configuration from the first system configuration information to change the first system configuration information into the second system configuration information.

12. The system configuration changing computer program according to claim 10, wherein
all system configurations capable of being taken by the information processing device are defined in the first system configuration information, and
the device configuration changing unit deletes an unnecessary system configuration from the first system configuration information to change the first system configuration information into the second system configuration information.
